(19)

Europäisches
Patentamt
European
Patent Office
Office européen
des brevets

(11)  **EP 2 316 896 A2**

(12)  **EUROPEAN PATENT APPLICATION**
published in accordance with Art. 153(4) EPC

(43) Date of publication:
**04.05.2011 Bulletin 2011/18**

(21) Application number: **09806857.0**

(22) Date of filing: **12.08.2009**

(51) Int Cl.:
***C09D 175/04*** (2006.01)

(86) International application number:
**PCT/KR2009/004503**

(87) International publication number:
**WO 2010/018995 (18.02.2010 Gazette 2010/07)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **12.08.2008  KR 20080078822**

(71) Applicant: **SSCP Co., Ltd.
Gyeonggi-do 425-833 (KR)**

(72) Inventors:
 • **KIM, Yong Min
   Ansan-si
   Gyeonggi-do 405-819 (KR)**
 • **CHOI, Hae Woog
   Bucheon-si
   Gyeonggi-do 420-753 (KR)**

 • **JANG, Tae Yong
   Ansan-si
   Gyeonggi-do 425-100 (KR)**
 • **KIM, Sang Hwan
   Gunpo-si
   Gyeonggi-do 435-725 (KR)**
 • **CHOI, Yong Jin
   Seoul 151-801 (KR)**
 • **KIM, Min Jeong
   Seoul 110-080 (KR)**
 • **MIN, Kyoung Beom
   Seoul 151-017 (KR)**

(74) Representative: **Chaillot, Geneviève
   Cabinet Chaillot
   16-20 Avenue de l'Agent Sarre
   B.P. 74
   92703 Colombes Cedex (FR)**

(54)  **PHOTOCURABLE COATING COMPOSITION**

(57)     Disclosed is a photocurable coating composition for an optical fiber. The photocurable coating composition can be used to produce an optical fiber having a low polarization mode dispersion (PMD) even by a non-spinning process. The photocurable coating composition includes a photopolymerizable urethane acrylate oligomer, a reactive monomer, a photoinitiator and an amine additive. Further disclosed is an optical fiber using the photocurable coating composition. The optical fiber has a polarization mode dispersion (PMD) of 0.1 ps/√km or less when produced by a non-spinning process.

EP 2 316 896 A2

## Description

[Technical Field]

The present invention relates to a photocurable coating composition for an optical fiber. More particularly, the present invention relates to a photocurable coating composition that can be used to produce an optical fiber having a low polarization mode dispersion (PMD) even by a non-spinning process, and an optical fiber using the photocurable coating composition.

[Background Art]

A single optical fiber strand typically has a diameter of 0.1 to 1 mm. Since an optical fiber is drawn strand by strand, its quality is very sensitive to production factors, such as fine phase or tensile strength difference. After drawing, optical fibers are coated with polymeric materials such as primary and secondary coating materials, ink materials and ribbon materials. Thus, various characteristics and curing techniques related to such coating materials have been developed. In line with the recent need for improved production rates, development has been directed towards techniques for improving the degree of cure of polymeric coating materials for optical fibers. However, research on the functions of coating materials for non-spinning processes is not actively underway.

With recent rapid advances in information technology, there is a growing need for large-capacity, high-speed data transmission through optical fibers. To meet this need, first of all, low polarization mode dispersion (PMD) of optical fibers should be solved. PMD is a dispersion phenomenon of pulses at a given distance which has an affect upon system performance. Pulse dispersion has a direct influence on system transmission ability. In other words, PMD has the same meaning as transmission loss of optical signals.

That is, low PMD is an important factor in transmission systems such as long-distance-multi-channel-data transmission systems.

Generally, PMD generation in an optical fiber is broadly due to two causes: inherent characteristics of the optical fiber and external stress during cabling. The inherent characteristics of the optical fiber can be divided into noncircularity of a quartz glass core and a cladding of the optical fiber, bubbles in the core, residual stress of the cladding and an elliptical coating. Bending stress may be one form of external stress applied during cabling.

It was widely reported that the above-mentioned PMD problems can be solved by applying a spinning process during drawing of optical fibers to inhibit the generation of PMD caused by inherent characteristics of the optical fibers. However, an optical fiber having undergone a spinning process may suffer from many problems during subsequent processing when compared to an optical fiber not having undergone a spinning process. For example, when an optical fiber having undergone a spinning process is processed into a ribbon matrix optical fiber, there is a high possibility that problems such as twisting will occur. This twisting may cause non-uniformity of coating state and geometrical structure and is also a cause of deterioration of the characteristics of the optical fiber.

Although efforts have been made to provide materials and methods for the production of low PMD optical fibers, there still remains a need for coating materials that exhibit desired physical properties, satisfy various demands such as broad applicability, improved curability and enhanced degree of cure, and maintain low PMD values during a non-spinning process.

[Disclosure]

[Technical Problem]

Thus, it is an object of the present invention to provide a photocurable coating resin composition that can be used to produce a low PMD optical fiber even by a non-spinning process while maintaining the low PMD of the optical fiber during drawing and prevents twisting of the optical fiber even during subsequent processing the optical fiber into a ribbon matrix optical fiber. It is another object of the present invention to provide an optical fiber coated with the photocurable coating resin composition.

[Technical Solution]

To achieve these objects, the present invention provides a photocurable coating composition including a photopolymerizable urethane acrylate oligomer, a reactive monomer, a photoinitiator and an amine additive wherein the photocurable coating composition is used to produce an optical fiber having a polarization mode dispersion (PMD) of 0.1 ps/√km or less by a non-spinning process. The photopolymerizable urethane acrylate oligomer, the reactive monomer, the photoinitiator and the amine additive may be present in amounts of 30 to 90% by weight, 5 to 60% by weight, 1 to 15% by weight and 0.01 to 0.5% by weight, respectively.

Preferably, the photocurable coating composition of the present invention further includes 0.5 to 5% by weight of a silane monomer, a stabilizer or a mixture thereof.

[Advantageous Effects]

An optical fiber coated with the photocurable coating resin composition of the present invention exhibits low shrinkage characteristics to minimize stress arising during production. Particularly, even when the optical fiber is produced by a non-spinning process, it has a low PMD.

[Best Mode]

The present invention provides a photocurable coating composition. In one embodiment, the photocurable coating composition includes a urethane acrylate oligomer (A) synthesized from a composition including a polyol copolymer, a polyisocyanate, an acrylate alcohol, a urethane reaction catalyst and a polymerization inhibitor wherein the urethane acrylate oligomer (A) is a copolymer of polyester polyol and polyether polyol monomers in an appropriate ratio and has a number average molecular weight (Mw) of 15,000 to 25,000. More specifically, the photocurable coating resin composition includes the oligomer (A), (B) a reactive monomer, (C) a photoinitiator, (D) an amine additive and (E) one or more additives in an appropriate ratio and has a shrinkage on cure of 0.5 to 1%.

Hereinafter, the constituent components of the photocurable coating composition according to the present invention will be described in detail.

(A) Photopolymerizable urethane acrylate oligomer

The photopolymerizable urethane acrylate oligomer (A) used in the photocurable coating composition of the present invention is synthesized from a composition including (i) a polyol copolymer, (ii) a polyisocyanate, (iii) an acrylate alcohol, (iv) a urethane reaction catalyst and (v) a polymerization inhibitor. Preferably, the photopolymerizable urethane acrylate oligomer (A) is composed of polyester polyol and polyether polyol units in a weight ratio of 10:30 to 70:90 and has a number average molecular weight (Mw) of 15,000 to 25,000.

The photopolymerizable urethane acrylate oligomer (A) is preferably used in an amount of 30 to 90% by weight, based on the total weight of the photocurable coating resin composition. The use of the photopolymerizable urethane acrylate oligomer (A) in an amount of less than 30% by weight may increase the shrinkage on cure of the resin composition, causing microbending loss and vapor generation by UV energy or heating during processing. Meanwhile, the use of the photopolymerizable urethane acrylate oligomer (A) in an amount exceeding 90% by weight may increase the viscosity during processing to above a workable level, resulting in poor workability.

The constituent components of the composition for the synthesis of the oligomer (A) are as follows.

(i) Polyol copolymer

Preferably, the polyol copolymer (i) has a molecular weight of 100 to 10,000 and contains $-CH_2CH_2O-$ or $-CH_2CH(CH_2CH_3)O-$ as a repeating unit.

The polyol copolymer (i) is preferably selected from the group consisting of polyester polyols, polyether polyols, polycarbonate polyols, polycaprolactone polyols, tetrahydrofuran propylene oxide ring opening copolymers, ethylene glycol, propylene glycol, 1,4-butanediol, 1,5-pentanediol, 1,6-hexandiol, neopentyl glycol, 1,4-cyclohexane dimethanol, bisphenol-A type diols, and mixtures thereof.

More preferred is a mixture of 10 to 30% by weight of a polyether polyol or a tetrahydrofuran propylene oxide ring opening copolymer and 70 to 90% by weight of a polyester polyol.

The polyol polymer is preferably used in an amount of 30 to 75% by weight, based on the total weight of the composition for the photopolymerizable urethane acrylate oligomer (A).

(ii) Polyisocyanate

The polyisocyanate (ii) is preferably selected from the group consisting of 2,4-tolylene diisocyanate, 2,6-tolylene diisocyanate, 1,3-xylene diisocyanate, 1,4-xylene diisocyanate, 1,5-naphthalene diisocyanate, 1,6-hexane diisocyanate, isophorone diisocyanate (IPDI), and mixtures thereof. The polyisocyanate (ii) is preferably used in an amount of 10 to 40% by weight, based on the weight of the photopolymerizable urethane acrylate oligomer (A).

(iii) Acrylate alcohol

The acrylate alcohol (iii) has one or more (meth)acrylate and hydroxyl groups. The acrylate alcohol (iii) is preferably selected from the group consisting of 2-hydroxyethyl (meth)acrylate, 2-hydroxypropyl (meth)acrylate, 2-hydroxybutyl (meth)acrylate, 2-hydroxyethyl acrylate, 2-hydroxypropyl acrylate, 2-hydroxy-3-phenyloxypropyl (meth)acrylate, 4-hydroxybutyl acrylate, neopentyl glycol mono(meth)acrylate, 4-hydroxycyclohexyl (meth)acrylate, 1,6-hexanediol mono(meth)acrylate, pentaerythritol penta(meth)acrylate, dipentaerythritol penta(meth)acrylate, and mixtures thereof.

The acrylate alcohol (iii) is preferably used in an amount of 10 to 35% by weight, based on the weight of the photopolymerizable urethane acrylate oligomer (A).

(iv) Urethane reaction catalyst

The urethane reaction catalyst (iv) is added in a small quantity to catalyze the urethane reaction. The urethane reaction catalyst (iv) is preferably selected from the group consisting of copper naphthenate, cobalt naphthenate, zinc naphthenate, n-butyltin laurate, tristhylamine, 2-methyltriethylenediamide, and mixtures thereof.

The reaction catalyst (iv) is preferably used in an amount of 0.01 to 1% by weight, based on the weight of the photopolymerizable urethane acrylate oligomer (A).

(v) Polymerization inhibitor

The polymerization inhibitor (v) is preferably selected from the group consisting of hydroquinone, hydroquinone monomethyl ether, para-benzoquinone, phenothiazine, and mixtures thereof. The polymerization inhibitor (v) is preferably used in an amount of 0.01 to 1% by weight, based on the weight of the photopolymerizable urethane acrylate oligomer (A).

The photopolymerizable urethane acrylate oligomer (A) can be synthesized from the components (i) to (v) by the following procedure. First, the polyol copolymer (i), the polymerization inhibitor (v) and, optionally, a polyester compound are put into a reactor and are maintained under vacuum or reduced pressure to remove moisture in order to prevent side reactions between moisture and the isocyanate in the subsequent step. The moisture-free mixture is kept at 40 to 65 °C for 0.5 to 1 hr, and then the polyisocyanate (ii) is added portionwise thereto. To the resulting mixture is added one third of the total weight of the urethane reaction catalyst (iv) with stirring at 200 to 300 rpm. Care must be taken because a large amount of heat is released during the reaction. After the heat release is complete, the reaction is further carried out for about 2 to about 3 hr while maintaining the reaction temperature at 50 to 75 °C until the -OH peaks in the FT-IR spectrum disappear. After completion of the reaction, the acrylate alcohol (ii) is added. At this time, care must also be taken because a large amount of heat is released during the reaction. After the heat release is complete, the temperature is raised to 60 to 80 °C. The remaining portion of the urethane reaction catalyst (iv) is added. The reaction is continued until the -NCO peaks in the FT-IR spectrum disappear, affording the photopolymerizable urethane acrylate oligomer (A).

(B) Reactive monomer

The reactive monomer (B) used in the photocurable coating composition of the present invention serves as a diluent to adjust the working viscosity with the photopolymerizable urethane acrylate oligomer (A) having a polymeric structure. Thus, it is preferred that the reactive monomer (B) has a lower molecular weight. The reactive monomer has at least one acrylate, methacrylate or vinyl group and is used in an amount of 5 to 60% by weight with respect to the total weight of the coating resin composition. The use of the reactive monomer in an amount of less than 5% by weight may make it difficult to dilute the high-viscosity oligomer (A) to a viscosity of 3,000 to 10,000 cps (at 25 °C), which is a workable level. Meanwhile, the use of the reactive monomer in an amount exceeding 60% by weight may cause low shrinkage on cure of a film and may deteriorate the heat stability of a film at high temperature, leading to gelation. This gelation causes an increase in viscosity and particle size, which induces surface non-uniformity upon coating and cause optical loss.

The reactive monomer has at least one acrylate, methacrylate or vinyl group in the molecular structure. The reactive monomer may have one to three or more different functional groups. It is particularly preferred that the reactive monomer exhibits low shrinkage on cure while possessing a high tensile strength in a film state. The reactive monomer is preferably selected from the group consisting of phenoxyethyl acrylate, phenoxyethylene glycol acrylate, phenoxytetraethylene glycol acrylate, phenoxyhexaethylene glycol acrylate, isobornyl acrylate (IBOA), isobornyl methacrylate, N-vinylpyrrolidone (N-VP), N-vinylcaprolactam (N-VC), acryloyl morpholine (ACMO), bisphenol ethoxylate diacrylate, ethoxylate phenol monoacrylate, polyethylene glycol 400 diacrylate, tripropylene glycol diacrylate, trimethylpropane triacrylate (TMPTA), polyethylene glycol diacrylate, ethylene oxide-addition triethylolpropane triacrylate (EO-TMPTA), pentaerythritol tetraacrylate (PETA), 1,4-butanediol diacrylate, 1,6-hexanediol diacrylate, ethoxylated pentaerythritol tetraacrylate, ethoxylated nonylphenol acrylate, 2-phenoxyethyl acrylate, ethoxylated bisphenol A diacrylate, alkoxylated nonylphenol acrylate, alkoxylated trifunctional acrylate ester, metallic diacrylate, trifunctional acrylate ester, trifunctional methacrylate ester, and mixtures thereof.

If needed, a monomer effective to provide an increase in adhesive strength may be further used to improve adhesion to an adherend.

(C) Photoinitiator

The photoinitiator (C) used in the photocurable coating composition of the present invention is added to ensure a high degree of cure of the resin in order to allow a coating process for the production of an optical fiber to carry out at a high line velocity of at least 1,500 m/min. The photoinitiator (C) forms free radicals when exposed to UV energy and attacks the double bonds of the resin to induce polymerization of the resin.

The photoinitiator (C) is preferably selected from the group consisting of Irgacure #184 (hydroxycyclohexyl phenyl ketone), Irgacure #907 (2-methyl-1-[4-(methylthio)phenyl]- 2-morpholino-propan-1-one), Irgacure #500 (hydroxyketones and benzophenone), Irgacure #651 (benzyl dimethyl ketone), Darocure #1173 (2-hydroxy-2-methyl-1-phenyl-propan-1-one), Darocure TPO (2,4,6-trimethylbenzoyldiphenylphosphine oxide), Darocure CGI#1800 (bisacyl phosphine oxide), Darocure CGI#1700 (bisacyl phosphine oxide and hydroxyketone), all of which are commercially available from Ciba Geigy, and mixtures thereof. The photoinitiator (C) is used in an amount of 1 to 15% by weight, based on the total weight of the coating resin composition.

(D) Amine additive

The amine additive used in the photocurable coating composition of the present invention is added to prevent the photocurable coating resin composition from being polymerized by heat and light before curing. Other roles of the amine additive are to prevent the generation of hydrogen gas after curing, to prevent transmittance loss of an optical fiber and to ensure a high degree of cure upon rapid drawing. The amine additive is preferably selected from the group consisting of diallylamine, diisopropylamine, diethylamine, diethylhexylamine, triethlyamine, N-methyldiethanolamine, ethanol amine, diethanol amine, and mixtures thereof. The amine additive (D) is used in an amount of 0.01 to 0.5% by weight, based on the total weight of the photocurable coating resin composition.

(E) Other additives - Silane monomer, stabilizer or a mixture thereof

Optionally, the photocurable coating resin composition may further include a silane monomer, a stabilizer or a mixture thereof to prevent a reduction in adhesion between a coating layer and glass in a subsequent process. The silane monomer, the stabilizer or the mixture thereof (E) is used in an amount of 1 to 5% by weight, based on the total weight of the coating resin composition. These additives are readily commercially available. If the optional additive is out of the range defined above, the degree of cure of the coating resin composition may be lowered.

The silane monomer basically reduces the water absorption rate of the resin composition as well as increases adhesion between a coating layer and glass in a subsequent process. Examples of silane monomers suitable for use in the present invention include vinyltrimethoxysilane, vinyltrimethoxysilane, vinyltri(methoxyethoxy)silane, γ-methacryloxypropyltrimethoxysilane, γ-glycidoxypropylmethoxysilane, γ-aminopropyltriethoxysilane and γ-mercaptopropyltrimethoxysilane, all of which are available from Chisso Corp. (Japan). These silane monomers may be used alone or as a mixture thereof.

The stabilizer plays a role in improving the thermal, oxidation and storage stability of the coating resin composition. A representative example of the stabilizer is an oxidant. Examples of oxidants suitable for use in the present invention include Irganox 1010, Irganox 1035 and Irganox 1076, all of which are available from Ciba. These oxidants may be used alone or as a mixture thereof.

When the photocurable coating resin composition of the present invention is used as a first coating material for the production of an optical fiber, it exhibits a low shrinkage on cure of 0.05 to 1%, which is a level sufficient to minimize internal and external stress arising during production of the optical fiber. The photocurable coating resin composition of the present invention can be used to produce a low PMD optical fiber even by a non-spinning process.

[Mode for Invention]

Hereinafter, the present invention will be explained in more detail with reference to the following examples. However, these examples are provided for illustrative purposes only and are not intended to limit the scope of the invention.

**<EXAMPLES>**

Synthesis of photopolymerizable urethane acrylate oligomer (A)

Synthesis Example 1

138.32 g (4 moles) of isophorone diisocyanate (IPDI) (Lyondell Chemical Company) and 0.50 g of dibutyltin dilaurate (Songwon Industrial (Korea)) were placed in a 2 L round-bottom flask equipped with an agitator. After the reaction temperature was raised to 80 °C, 109.03 g (0.7 moles) of polytetramethylene glycol polyol (PTMG) (BASF) having an average molecular weight of 1,000 was added to the flask. After the addition was finished, the NCO content of the reaction mixture whose theoretical NCO content is 8.67% was adjusted to 7.5-8.5%. 716.50 g (2.3 moles) of polypropylene glycol polyol (PPG) (Korea Polyol (Korea)) having an average molecular weight of 2,000 was added. After the addition was finished, the NCO content of the reaction mixture whose theoretical NCO content is 1.07% was adjusted to 0.7-1.0% to obtain a urethane prepolymer. 2.15 g of hydroquinone monomethyl ether (HQMME) (Eastman) and 37.96 g (2 moles) of 2-hydroxyethyl acrylate (2-HEA) (Nippon Shokubai (Japan)) were slowly added. After the addition was finished, the reaction temperature was maintained to 80 °C for 1 hr. The completion of the reaction was confirmed by the disappearance of the NCO peak at 2,275 cm$^{-1}$ in the IR spectrum, indicating the reaction of the isocyanate. As a result of the reaction, a urethane (meth)acrylate oligomer was prepared. The number average molecular weight (Mw) of the oligomer was found to be 25,000 g/mol, as determined by gel permeation chromatography (GPC). The oligomer was found to have a viscosity of 65,000 cps and an average of four urethane bonds.

Synthesis Example 2

135.8 g (3 moles) of isopropyl diisocyanate and 0.05 g of dibutyltin dilaurate were placed in a 3 L round-bottom flask equipped with an agitator. After the reaction temperature was raised to 80 °C, 816.6 g (2 moles) of a mixture of polyether and polyester polyols having an average molecular weight of 2,000 (Korea Polyol (Korea)) was added to the flask. After the addition was finished, the NCO content of the reaction mixture whose theoretical NCO content is 0.6% was adjusted to 0.1-0.3% to obtain a urethane prepolymer. 47.4 g (2 moles) of 2-hydroxyethyl acrylate was slowly added. After the addition was finished, the reaction temperature was maintained at 80 °C for 3 hr. The completion of the reaction was confirmed by the disappearance of the NCO peak at 2,270 cm$^{-1}$ in the IR spectrum, indicating the reaction of the isocyanate. As a result of the reaction, a urethane (meth)acrylate oligomer was prepared. The number average molecular weight (Mw) of the oligomer was found to be 22,000 g/mol, as determined by gel permeation chromatography (GPC). The oligomer was found to have a viscosity of 13,500 cps and an average of four urethane bonds.

Synthesis Example 3

129.6 g of isopropyl diisocyanate and 0.05 g of dibutyltin dilaurate were placed in a 2 L round-bottom flask equipped with an agitator. After the reaction temperature was raised to 80 °C, 778.2 g of polytetramethylene glycol polyol having an average molecular weight of 2,000 (BASF) was added to the flask. After the addition was finished, the NCO content of the reaction mixture whose theoretical NCO content is 0.6% was adjusted to 0.4-0.6% to obtain a urethane prepolymer. 91.8 g of 2-hydroxyethyl acrylate was slowly added. After the addition was finished, the reaction temperature was maintained at 80 °C for 3 hr. The completion of the reaction was confirmed by the disappearance of the NCO peak at 2,270 cm$^{-1}$ in the IR spectrum, indicating the reaction of the isocyanate. As a result of the reaction, a urethane (meth) acrylate oligomer was prepared. The number average molecular weight (Mw) of the oligomer was found to be 18,000 g/mol, as determined by gel permeation chromatography (GPC). The oligomer was found to have a viscosity of 75,000 cps and an average of four urethane bonds.

Synthesis Comparative Example 1

259.5 g of isopropyl diisocyanate and 0.05 g of dibutyltin dilaurate were placed in a 2 L round-bottom flask equipped with an agitator. After the reaction temperature was raised to 80 °C, 583.7 g of polytetramethylene glycol polyol having an average molecular weight of 1,000 (BASF) was added to the flask. After the addition was finished, the NCO content of the reaction mixture whose theoretical NCO content is 0.5% was adjusted to 0.1-0.3% to obtain a urethane prepolymer. 155.7 g of 2-hydroxyethyl acrylate was slowly added. After the addition was finished, the reaction temperature was maintained at 80 °C for 3 hr. The completion of the reaction was confirmed by the disappearance of the NCO peak at 2,270 cm$^{-1}$ in the IR spectrum, indicating the reaction of the isocyanate. As a result of the reaction, a urethane (meth) acrylate oligomer was prepared. The number average molecular weight (Mw) of the oligomer was found to be 5,500 g/mol, as determined by gel permeation chromatography (GPC). The oligomer was found to have a viscosity of 28,000 cps and an average of four urethane bonds.

Examples 1-3 and Comparative Example 1

As shown in Table 1, the oligomers prepared in Synthesis Examples 1-3 and Synthesis Comparative Example 1 were mixed with other components to prepare coating resin compositions.

**TABLE 1**

| | | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|
| Oligomers | Synthesis Example 1 (Mw. 25,000) | 50 | 48 | 48 | | | | | | | |
| | Synthesis Example 2 (Mw. 22,000) | | | | 57 | 63 | | | | | |
| | Synthesis Example 3 (Mw. 18,000) | | | | | | 41 | | | | |
| | Synthesis Comparative Example 1 (Mw. 5,500) | | | | | | | 65 | 56 | | |
| | Miramer PU220(Mw. 4,800) | | | | | | | | | 60 | 55 |
| Monomers | M-164 | 25 | 32 | 42 | 28 | | 45 | 25 | 45 | 30 | 40 |
| | NPF-041 | | | | | 27 | | | | | |
| | NVC | | 3 | 5 | 5 | | | 5 | | | |
| | SR-506 | | 12 | | 6 | | 10 | | | 6 | |
| | SR-339 | 18 | | | | | 6 | 5 | | | |
| | | | | | | | | | | | |
| Photoinitiator | Darocure TPO | 2 | 3 | 3 | 2 | 2 | 2 | 3 | 2 | 2 | 3 |
| Additives | Irganox 1076 | 2 | 3 | 3 | 2 | 2 | 2 | 3 | 2 | 2 | 3 |
| | S-810 | 1 | 1 | 1 | 1 | 1 | 1 | 1 | 1 | 1 | 1 |
| | Diethylamine | 0.05 | 0.05 | 0.05 | 0.05 | 0.05 | 0.05 | 0.05 | 0.05 | 0.05 | 0.05 |

The components and trademarks used in Table 1 are as follows. It should be noted that each of the components and trademarks refers to a compound or composition.

Miramer PU220: Aliphatic difunctional urethane acrylate oligomer (Mw = 4,800) available from Miwon Commercial Co., Ltd. (Korea)

M-164: Ethoxylated (4) nonylphenol acrylate available from Miwon Commercial Co., Ltd. (Korea)

NPF-041: Propylene oxide (4) nonylphenol acrylate available from Hannong Chemicals Inc. (Korea)

NVC: N-Vinylcaprolactam available from BASF

SR-506: Isobornyl acrylate available from Sartomer

SR-339: 2-Phenoxyethyl acrylate available from Sartomer

M-2100: Ethoxylated (10) bisphenol A diacrylate available from Miwon Commercial Co., Ltd. (Korea)

Darocure TPO: 2,4,6-Trimethylbenzoyl diphenyl phosphine oxide available from CIBA

Irganox 1076: Octadecyl-3-(3,5-di-tert-butyl-4-hydroxyphenyl)propionate available from CIBA

S-810: γ-Mercaptopropyltrimethoxysilane available from CHISSO

Diethylamine: Available from JUNSEI

Evaluation of physical properties of photocurable coating resin compositions

In order to assess the correlation between the mechanical properties of the coating resin compositions for optical fibers prepared in Examples 1-6 and Comparative Examples 1-4 and the PMD characteristics of optical fibers produced using the coating resin compositions, the viscosity, 2.5% secant modulus, degree of cure, adhesion to glass, glass transition temperature and shrinkage on cure of the coating resin compositions were measured by the following methods. The results are shown in Table 2.

Viscosity

The viscosity of each of the coating resin compositions was measured at 25 °C in a torque ranging from 50 to 90% using a Brookfield DV III+ viscometer provided with a spindle #31 in accordance with the standard method of ASTM D-2196.

2.5% Secant modulus

After each of the coating resin compositions was spread on a glass plate having a size of 20 cm x 20 cm, the coating thickness was set to 7-10 mil using a bar coater. The coated glass plate was placed in a fixed frame into which nitrogen was fed at a flow rate of 40 1pm. Thereafter, the composition was cured by irradiation with a 600 Watt 9 mm D-bulb (DRS10/12-QN, Fusion) at a rate of 30 fpm and a dose of 1.0 J/cm$^2$ to produce a 100 $\mu$m thick film. The film was separated from the glass plate, cut to a width of 13 mm using a dedicated blade (JDC cutter), and stored in a desiccator at a temperature of 23 °C and a relative humidity of 50% or less for one day. The 2.5 secant modulus of the film was measured while pulling the film at a rate of 25 mm/min using a universal testing machine (4443 UTM, Instron).

Degree of cure

After each of the coating resin compositions was spread on a glass plate having a size of 20 cm x 20 cm, the coating thickness was set to 7-10 mil using a bar coater. The coated glass plate was placed in a fixed frame into which nitrogen was fed at a flow rate of 40 1pm. Thereafter, the composition was cured by irradiation with a 600 Watt 9 mm D-bulb (DRS10/12-QN, Fusion) at different rates of 50, 100, 200 and 400 fpm and different doses of 0.5, 0.2, 0.1 and 0.06 J/cm$^2$ (Radiometer: UV Power PUCK, UVA 320-390 nm, EIT Co., Ltd.) to produce 100 $\mu$m thick films. The films were separated from the glass plate, cut to a width of 13 mm using a dedicated blade (JDC cutter), and stored in a desiccator at a temperature of 23 °C and a relative humidity of 50% or less for one day. The 2.5% secant modulus values of the films were measured while pulling the films at a rate of 25 mm/min using a universal testing machine (4443 UTM, Instron). The degree of cure was defined as the UV dose at 95% of ultimate secant modulus.

Adhesion to glass

After each of the coating resin compositions was spread on a glass plate having a size of 20 cm x 20 cm, the coating thickness was set to 5 mil using a bar coater. A second coating agent was spread on the composition and was set to a thickness of 10 mil. The coated glass plate was placed in a fixed frame into which nitrogen was fed at a flow rate of 40 1pm. Thereafter, the coated composition and the second coating agent were cured by irradiation with a 600 Watt 9 mm D-bulb (DRS10/12-QN, Fusion) at a rate of 30 fpm and a dose of 1.0 $J/cm^2$ to produce a film. The film was cut to a width of 25 mm and stored in a desiccator at a temperature of 23 °C and a relative humidity of 50% or less for one day. The adhesion of the film to the glass was measured while pulling the film at a rate of 25 mm/min in a direction perpendicular to the glass using a universal testing machine (4443 UTM, Instron).

Glass transition temperature ($T_g$)

After each of the coating resin compositions was spread on a glass plate having a size of 20 cm x 20 cm, the coating thickness was made uniform using a bar coater. The coated glass plate was placed in a fixed frame into which nitrogen was fed at a flow rate of 40 1pm. Thereafter, the composition was cured by irradiation with a 600 Watt 9 mm D-bulb (DRS10/12-QN, Fusion) at a rate of 30 fpm and a dose of 1.0 $J/cm^2$ to produce a 600 $\mu$m thick film. The film was cut into a sample having a length of about 15 mm and a width of about 10 mm. The sample was mounted on a dynamic mechanical temperature analyzer (DMTA IV, Rheometry) and the measured geometrical values were input to the analyzer. The sample was cooled to about -100 °C and was then heated to about 60 °C at a rate of 2 °C/min. The test frequency was 1.0 radian/sec. The measurement results were plotted. The glass transition temperature ($T_g$) of the sample was calculated from tan delta peaks of the graph.

Shrinkage on cure

The shrinkage on cure of each of the coating resin compositions was measured by the following method. First, an empty pycnometer was weighed. The pycnometer was filled with water at 23 °C and covered with a lid. After the water remaining on the outer surface of the pycnometer was removed, the weight of the filled pycnometer was measured and recorded. The film sample (5 $\pm$ 0.1 g) was cured at 30 fpm and 1.0 $J/cm^2$ and was put into the pycnometer. The difference in the weight of the pycnometer was calculated and recorded. Water was filled in the pycnometer so as to fully dip the cured film sample. The weight of the filled pycnometer was measured.

The shrinkage on cure (%) was calculated according to the following equations:

$$X = (a \times d)/(b + am)$$

where
a = Film sample weight
d = Specific gravity of uncured sample
b = Weight of pycnometer and water
m = Weight of water and sample in pycnometer
e = Weight of pycnometer

$$\% \text{ Shrinkage} = (X\text{-}d)/d$$

Production of optical fibers

Each of the resin compositions prepared in Examples 1-6 and Comparative Examples 1-4 as a first coating agent was applied to a quartz glass fiber having a diameter of 125 $\mu$m using an optical fiber draw apparatus (Nextrom Co., Ltd.) at a drawing rate of 1,500 mpm. A second coating agent (Efiron LS 2171, SSCP Corp. (Korea)) was applied to the coated glass fiber. The coating agents were cured simultaneously under a UV lamp (DRS10/12-part, 600 watt, Fusion) to produce an optical fiber having a diameter of 250 μm.

The above coating procedure was conducted by a non-spinning process. The optical fiber had a cladding noncircularity of 0.3-0.5, which is a preferable range.

PMD measurement

The optical fibers were stored at a temperature of 23 °C and a relative humidity of 50% or less for 3 days. The optical fibers were processed into free tension fibers. The PMD values of the free tension fibers were measured using a PMD measurement system (PMD 4000, PE. Fiberoptics Co., Ltd.) in accordance with an interferometric method. The results are shown in Table 2.

**TABLE 2**

| | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|
| Viscosity (cps) | 5,451 | 5,770 | 7,250 | 3,216 | 5,661 | 5,092 | 7,558 | 3,009 | 3,124 | 2,919 |
| 2.5% secant modulus | 0.12 | 0.09 | 0.11 | 0.17 | 0.15 | 0.13 | 0.23 | 0.16 | 0.13 | 0.19 |
| Degree of cure (Joul/cm$^2$) | 0.4 | 0.4 | 0.25 | 0.15 | 0.19 | 0.38 | 0.11 | 0.13 | 0.31 | 0.28 |
| Adhesion to glass (N) | 1.29 | 2.77 | 1.76 | 1.39 | 1.21 | 1.0 | 1.59 | 1.79 | 3.56 | 1.31 |
| Glass transition temp. (°C) | -18 | -16 | -24 | -21 | -34 | -22 | -13 | -23 | -15 | -13 |
| Shrinkage on cure (%) | 0.61 | 0.78 | 0.67 | 0.85 | 0.67 | 0.98 | 3.04 | 3.74 | 5.12 | 4.59 |
| PMD (ps/√km) | 0.052 | 0.063 | 0.045 | 0.086 | 0.071 | 0.089 | 0.135 | 0.157 | 0.307 | 0.28 |

The PMD of an optical fiber is indicative of the reliability of the optical fiber and is typically 0.2 or less (ITU-T G-652, 657), more preferably 0.1 or less. As can be seen from the results in Table 2, the optical fibers of Comparative Examples 1-4, which were produced using the coating resin compositions having high shrinkage values, had PMD values higher than 0.1 ps/√km. Therefore, the optical fibers of Comparative Examples 1-4 may be unsuitable for use in long-distance, high-capacity data transmission. In contrast, the optical fibers of Examples 1-6, which were produced using the coating resin compositions having low shrinkage values, had PMD values lower than 0.1 ps/√km. Therefore, the optical fibers of Examples 1-6 enable long-distance, high-capacity data transmission and can solve problems, such as twisting, arising during subsequent processing into a ribbon matrix optical fiber.

## Claims

1. A photocurable coating composition comprising a photopolymerizable urethane acrylate oligomer, a reactive monomer, a photoinitiator and an amine additive wherein the photocurable coating composition is used to produce an optical fiber having a polarization mode dispersion (PMD) of 0.1 ps/√km or less by a non-spinning process.

2. The photocurable coating composition according to claim 1, wherein the photocurable coating composition has a shrinkage on cure of 0.5 to 1 %.

3. The photocurable coating composition according to claim 1, wherein the photocurable coating composition has a 2.5% secant modulus of 0.05 to 0.3 kgf/mm$^2$.

4. The photocurable coating composition according to claim 1, wherein the photocurable coating composition has an adhesive strength of 1 to 5 N to a glass surface.

5. The photocurable coating composition according to claim 1, wherein the dose at 95% of ultimate secant modulus of the photocurable coating composition is 0.5 J/cm$^2$.

6. The photocurable coating composition according to claim 1, wherein the photopolymerizable urethane acrylate oligomer, the reactive monomer, the photoinitiator and the amine additive are present in amounts of 30 to 90% by weight, 5 to 60% by weight, 1 to 15% by weight and 0.01 to 0.5% by weight, respectively.

7. The photocurable coating composition according to claim 6, wherein the photopolymerizable urethane acrylate oligomer has a number average molecular weight (Mw) of 15,000 to 25,000 g/mol.

8. The photocurable coating composition according to claim 6, wherein the photocurable urethane acrylate oligomer (A) is synthesized from a composition comprising a polyol copolymer, a polyisocyanate, an acrylate alcohol, a urethane reaction catalyst and a polymerization inhibitor.

9. The photocurable coating composition according to claim 8, wherein the polyol copolymer has a molecular weight of 100 to 10,000 and contains -CH$_2$CH$_2$O- or - CH$_2$CH(CH$_2$CH$_3$)O- as a repeating unit.

10. The photocurable coating composition according to claim 8, wherein the polyol copolymer is a mixture of 10 to 30% by weight of a polyether polyol or a tetrahydrofuran propylene oxide ring opening copolymer and 70 to 90% by weight of a polyester polyol.

11. The photocurable coating composition according to claim 8, wherein the polyisocyanate is selected from the group consisting of 2,4-tolylene diisocyanate, 2,6-tolylene diisocyanate, 1,3-xylene diisocyanate, 1,4-xylene diisocyanate, 1,5-naphthalene diisocyanate, 1,6-hexane diisocyanate, isophorone diisocyanate (IPDI), and mixtures thereof.

12. The photocurable coating composition according to claim 8, wherein the acrylate alcohol has one or more methacrylate and hydroxyl groups.

13. The photocurable coating composition according to claim 6, wherein the reactive monomer has at least one acrylate, methacrylate or vinyl group.

14. The photocurable coating composition according to claim 13, wherein the reactive monomer is selected from the group consisting of phenoxyethyl acrylate, phenoxyethylene glycol acrylate, phenoxytetraethylene glycol acrylate, phenoxyhexaethylene glycol acrylate, isobornyl acrylate, isobornyl methacrylate, N-vinylpyrrolidone, N-vinylcaprolactam, acryloyl morpholine, bisphenol ethoxylate diacrylate, ethoxylate phenol monoacrylate, polyethylene glycol 400 diacrylate, tripropylene glycol diacrylate, trimethylpropane triacrylate, polyethylene glycol diacrylate, ethylene oxide-addition triethylolpropane triacrylate, pentaerythritol tetraacrylate, 1,4-butanediol diacrylate, 1,6-hexanediol diacrylate, ethoxylated pentaerythritol tetraacrylate, ethoxylated nonylphenol acrylate, 2-phenoxyethyl acrylate, ethoxylated bisphenol A diacrylate, alkoxylated nonylphenol acrylate, alkoxylated trifunctional acrylate ester, metallic diacrylate, trifunctional acrylate ester, trifunctional methacrylate ester, and mixtures thereof.

15. The photocurable coating composition according to claim 6, wherein the amine additive is selected from the group consisting of diallylamine, diisopropylamine, diethylamine, diethylhexylamine, triethlyamine, N-methyldiethanolamine, ethanol amine, diethanol amine, and mixtures thereof.

16. The photocurable coating composition according to claim 6, further comprising a silane monomer and a stabilizer.

17. The photocurable coating composition according to claim 16, wherein the silane monomer and the stabilizer are present in a total amount of 0.5 to 5% by weight.

18. An optical fiber coated with the photocurable coating composition according to any of claims 1 to 17 and produced by a non-spinning process.